# EUROPEAN PATENT SPECIFICATION

(11) **EP 3 663 382 B1**
(45) Date of publication and mention of the grant of the patent: **04.08.2021**
(21) Application number: 18306638.0
(22) Date of filing: 06.12.2018
(51) Int. Cl.: C10M 135/26, C07C 319/12, C07C 323/52, C07C 321/04, C10N 20/02, C10N 30/06, C10N 30/12, C10N 30/00, C10N 40/04, C10N 40/08, C10N 40/20, C10N 40/25

(54) **SULPHUR-CONTAINING ESTERIFIED POLYOL**
SCHWEFELHALTIGES ESTERIFIZIERTES POLYOL
POLYOL ESTÉRIFIÉ CONTENANT DU SOUFRE

(43) Date of publication of application: 10.06.2020
(73) Proprietor: Oleon N.V., 9940 Ertvelde (BE); Oleon Sdn Bhd, 42920 Port Klang Selangor Darul Ehsan (MY)
(72) Inventor: ZITOUNI, Karima, 91420 Morangis (FR); CHONG, Kim-Foong, 42000 Port Klang, Selangor (MY); LAI, Yew Chong, 25250 Kuantan, Pahang (MY)
(74) Representative: Santarelli

(56) References cited:
- EP-A1- 0 485 139
- EP-A1- 2 740 783
- JP-A- H1 180 117
- US-A- 3 706 527
- US-A1- 2014 142 006

## Description

The present invention relates to a new type of sulphur-containing esterified polyol, further referred to as sulphur-containing polyester, a process for its preparation, its use as an extreme pressure, a friction modifier and/or an anti-wear additive, as well as compositions comprising the said compound, in particular lubricant compositions.

The anti-wear, friction modifier and extreme pressure additives are particularly used in the field of lubricants.

A lubricating composition generally comprises an oil, usually the major constituent (the constituent whose content is the highest), and one or more additive(s). An additive is used to enhance one or more intrinsic property(ies) of the oil and / or provide it with one or more additional property(ies).

For example, US2014/142006 describes a lubricating oil composition containing: (A) organopolysiloxane; and (B) at least one of a sulfur compound, a phosphorus compound and a zinc compound, the lubricating oil composition having a kinematic viscosity not less than 1 mm²/s and less than 40.0 mm²/s at 100°C.

EP2740783 relates to a lubricating oil composition for internal combustion engines which can exhibit a good wear resistance for aluminum materials even when reducing a phosphorus content and a content of a metal component derived from a metal-based detergent in the composition.

An anti-wear additive reduces the wear of surfaces, such as metal surfaces.

Among the anti-wear additives, there may be mentioned polysulfides, dithiocarbamates, chlorinated paraffins, phosphates and thio-phosphates. Zinc dialkyl dithiophosphates (ZDDP), are particularly efficient, making them one of the most used type of additives. However, this type of additives has a high toxicity. Decomposition of the ZDDP releases various sulfur gases, such as hydrogen sulfide (H₂S) and mercaptans.

A friction modifier additive (or friction reducer agent) reduces the friction between two surfaces.

Among the most commonly used friction modifier additives, esters such as glycerol mono oleate (GMO), some fatty acids and amides such as oleate diethanolamide (ODEA) can be mentioned.

An extreme pressure additive prevents seizure of metal parts by increasing the resistance to high pressure and/or heat of the oil in the lubricating composition.

The most widely used extreme pressure additives are compounds based on sulphur, phosphorus and/or chlorine.

Medium chain chlorinated paraffins are good extreme pressure additives with additional anti-wear and friction modifier properties, and are only slightly corrosive. That is why these chlorinated additives are widely used in lubricant compositions for metalworking (cutting, stamping, forming,...), where friction of metal surfaces are frequent. But in such applications, projections of lubricant compositions may be released in the environment.

The US Environmental Protection Agency has already banned the use of short chain chlorinated paraffins and could gradually legislate on medium to long chains whose toxicity is recognized. This evolution of the legislation will lead to the gradual replacement of chlorinated paraffins by other less toxic extreme pressure additives such as sulphur and phosphorus derivatives.

There is therefore a need for a new alternative additive for these applications, which is the least toxic, such as a compound of renewable origin, with a reduced heteroatom content to limit the environmental impact.

It has been surprisingly found that a particular type of compound provides comparable anti-wear property, better friction modifier property and comparable to better extreme pressure property to products currently on the market, while being of renewable origin and having a lesser impact on the environment.

The invention concerns a sulphur-containing polyester capable of being obtained by a process comprising esterification reactions between a polyol and a carboxylic acid and a thiolactic acid. Alternatively, the sulphur-containing polyester is capable of being obtained by a process comprising an esterification reaction between a partially esterified polyol and a thiolactic acid.

The polyol preferably consists only of carbon, oxygen and hydrogen atoms.

Suitable polyols for the present invention are, but not limited to glycerol, polyglycerols (linear or cyclic, such as cyclic diglycerols), ethylene glycol, propylene glycol, neopentyl glycol, 1,3-propanediol, polyethylene glycol, polypropylene glycol, pentaerythritol, trimethylopropane and dimer diols.

A polyglycerol is commonly obtained from the homopolymerization reaction of glycerol, also called a polyaddition reaction. This homopolymerization (or polyaddition) reaction of glycerol consists of reacting several glycerol molecules together via their hydroxyl functions, resulting in the formation of molecules comprising several glycerol units linked by ether bonds. A polyglycerol is usually a mixture of polyglycerols with various degree of polymerization that is specified by a number "n" (polyglycerol-n) related to the average number of glycerol units per polyglycerol molecule.

The polyglycerol is preferably chosen from the group constituted by polyglycerol-2, polyglycerol-3, polyglycerol-4, polyglycerol-6, polyglycerol-8 and polyglycerol-10.

Preferably, the polyol is chosen from the group constituted by propylene glycol, neopentyl glycol, 1,3-propanediol, glycerol, polyglycerols, pentaerythritol and trimethylopropane. More preferably, the polyol is chosen from the group constituted by propylene glycol, glycerol, polyglycerols, pentaerythritol and trimethylopropane.

In the present invention, by "carboxylic acid" it is intended a saturated or unsaturated carboxylic acid, which is not a thiolactic acid. It is preferably a linear or branched monocarboxylic acid that comprises from 10 to 24, more preferably from 12 to 22, even more preferably from 16 to 20 carbon atoms.

In the present application, unless otherwise indicated, all ranges of values used are to be understood as being inclusive limits.

Advantageously, the carboxylic acid is obtained from a renewable source, such as vegetable, animal or algae source. Preferably, the carboxylic acid is a fatty acid. In particular, the fatty acid comprises from 10 to 24, more preferably from 12 to 22, even more preferably from 16 to 20, for example 18 carbon atoms. More particularly, the fatty acid is linear and comprises at most one double bond.

Thiolactic acid is also named 2-mercaptopropionic acid.

By a partially esterified polyol, it is intended a compound comprising at least one ester function and at least one hydroxyl function, the ester function resulting from an esterification of an hydroxyl function by a carboxylic acid.

The partially esterified polyol, preferably, consists of carbon, oxygen and hydrogen atoms.

Suitable partially esterified polyols for the present invention are, but not limited to, propylene glycol monoalkylates, ethyleneglycol monoalkylates, monoglycerides and diglycerides. Preferably, alkyl groups of propylene glycol monoalkylates and ethyleneglycol monoalkylates, comprise from 10 to 24, more preferably from 12 to 22, even more preferably from 16 to 20 carbon atoms.

The esterification reactions may be carried out according to any well-known conventional reaction conditions.

In case of a carboxylic acid is used to produce the sulphur-containing polyester of the invention, the molar equivalent ratio (hydroxyl function(s) of the polyol) / (carboxyl functions of the thiolactic acid and the carboxylic acid), is preferably of 1 +/- 0.1, more preferably of 1 +/- 0.05.

In case of no carboxylic acid is used to produce the sulphur-containing polyester of the invention, the molar equivalent ratio (hydroxyl function(s) of the partially esterified polyol) / (carboxyl function of the thiolactic acid), is preferably of 1 +/- 0.1, more preferably of 1 +/- 0.05.

If more than one polyol and/or more than one carboxylic acid is/are used, then the total amount of hydroxyl functions and/or carboxyl functions needs to be considered.

The esterification reactions may be carried out at a temperature comprised between 150 and 250 °C, preferably between 160 and 240°C.

An esterification catalyst may be used, such as methanesulfonic acid.

Advantageously, the water is removed as it forms from the reaction mixture.

According to a first embodiment, the sulphur-containing polyester of the invention is capable of being obtained by a process comprising or consisting of, an esterification reaction between a partially esterified polyol and a thiolactic acid, optionally followed by purification of the sulphur-containing polyester.

Preferably, the molar equivalent ratio (hydroxyl function(s) of the partially esterified polyol) / (carboxyl function of the thiolactic acid) is of 1 +/- 0.1, more preferably of 1 +/- 0.05.

The esterification reaction between the partially esterified polyol and the thiolactic acid is preferably conducted under stirring and heating at a temperature of at least 150°C, more preferably at least 160°C. In particular, the temperature is comprised between 150 and 190°C, more particularly between 160 and 180°C.

Preferably, the esterification reaction between the partially esterified polyol and the thiolactic acid is carried out until the acid value is less than 20, preferably less than 15 mg KOH/g, the acid value being measured according to standard AOCS Cd 3D-63.

In the present application, unless otherwise indicated, all acid values are measured according to standard AOCS Cd 3D-63.

Advantageously, the partially esterified polyol is capable of being obtained by an esterification reaction between a polyol and a carboxylic acid.

The polyol and the carboxylic acid are as described above, including preferential and advantageous features.

To obtain a partially esterified polyol, the molar equivalent ratio (hydroxyl functions of the polyol) / (carboxyl function(s) of the carboxylic acid), is preferably greater than 1.2. More preferably, the molar equivalent ratio (hydroxyl functions of the polyol) / (hydroxyl function(s) of the carboxylic acid), is of at least 1.3, even more preferably of at least 1.4.

Preferably, the molar equivalent ratio (hydroxyl functions of the polyol) / (carboxyl function(s) of the carboxylic acid), is of at most 5, more preferably of at most 4, even more preferably of at most 3.

The esterification reaction between the polyol and the carboxylic acid, is preferably conducted under stirring and heating at a temperature of at least 150°C, more preferably at least 180°C. In particular, the temperature is comprised between 180 and 250°C, more particularly between 200 and 240°C.

Preferably, the esterification reaction between the polyol and the carboxylic acid is carried out until the acid value is less than 10, preferably less than 8, more preferably less than 5 mg KOH/g.

According to a second embodiment, the sulphur-containing polyester of the invention is capable of being obtained by a process comprising or consisting of, esterification reactions between a polyol and a carboxylic acid and a thiolactic acid, optionally followed by purification of the sulphur-containing polyester.

More particularly, esterification reactions occur between a polyol and both carboxylic acid and thiolactic acid.

In a first particular embodiment of this second embodiment, the process is carried out in two steps. Thus, the sulphur-containing polyester of the invention is capable of being obtained by a process comprising or consisting of the following steps:
i) an esterification reaction between a polyol and a carboxylic acid to form a partially esterified polyol;
ii) an esterification reaction between the partially esterified polyol of step i) and thiolactic acid;
iii) optionally, purification of the sulphur-containing polyester formed in step ii).

Preferably, the molar equivalent ratio (hydroxyl functions of the polyol) / (carboxyl function(s) of the carboxylic acid), is of at least 1.2, more preferably of at least 1.3, even more preferably of at least 1.4.

Preferably, the molar equivalent ratio (hydroxyl functions of the polyol) / (carboxyl function(s) of the carboxylic acid), is of at most 5, more preferably of at most 4, even more preferably of at most 3.

The esterification reaction between the polyol and the carboxylic acid, is preferably conducted under stirring and heating at a temperature of at least 150°C, more preferably at least 180°C. In particular, the temperature is comprised between 180 and 250°C, more particularly between 200 and 240°C.

Preferably, the esterification reaction between the polyol and the carboxylic acid is carried out until the acid value is less than 10, preferably less than 8, more preferably less than 5 mg KOH/g.

The reaction mixture resulting from step i) is then allowed to cool down. Thiolactic acid is preferably mixed to the partially esterified polyol obtained in step i) at a temperature below 120°C, more preferably below 100°C.

Then, the preferred reaction conditions of the esterification reaction between the partially esterified polyol and the thiolactic acid are as described above according to the first embodiment.

Preferably, the molar equivalent ratio (carboxylic function(s) of the carboxylic acid) / (carboxylic function of the thiolactic acid) is comprised between 0.8 and 4, more preferably between 0.9 and 3, even more preferably between 1 and 2.5.

Preferably, the molar equivalent ratio (hydroxyl functions of the polyol) / (carboxylic functions of the carboxylic acid and the thiolactic acid) is of 1 +/- 0.1, more preferably of 1 +/- 0.05.

Advantageously, no catalyst is used during esterification reactions.

In a preferred embodiment of this first particular embodiment of the second embodiment, the sulphur-containing polyester of the invention is capable of being obtained by a process comprising or consisting of the following steps:
i) an esterification reaction between a polyol and a fatty acid, wherein the molar equivalent ratio (hydroxyl functions of the polyol) / (carboxyl function(s) of the fatty acid), is of at least 1.2, to form a partially esterified polyol;
ii) an esterification reaction between the partially esterified polyol of step i) and thiolactic acid;
iii) optionally, purification of the sulphur-containing polyester formed in step ii).

Preferably, the molar ratio fatty acid/ thiolactic acid is comprised between 0.8 and 4, more preferably between 0.9 and 3, even more preferably between 1 and 2.5.

In a second particular embodiment of this second embodiment, the process is carried out in one step. Thus, the sulphur-containing polyester of the invention is capable of being obtained by a process comprising or consisting of esterification reactions between a polyol and both carboxylic acid and thiolactic acid, at a temperature of at least 150°C, optionally followed by purification of the sulphur-containing polyester.

Preferably, the temperature is of at least 160°C.

Preferably, the temperature is comprised between 150 and 200°C, more particularly between 160 and 180°C.

An esterification catalyst may be used, such as methanesulfonic acid.

As evidenced by the Examples, any sulphur-containing polyester of the invention presents preferably a kinematic viscosity at 40°C of less than 1000 mm²/s, more preferably less than 800 mm²/s, even more preferably less than 600 mm²/s, the kinematic viscosity being measured according to ASTM D 445.

Additionally, any sulphur-containing polyester of the invention has a hydroxyl value of less than 100 mg KOH/g, preferably less than 95 mg KOH/g.

In the present application, unless otherwise indicated, all hydroxyl values are measured according to standard AOCS Cd 13-60.

Any sulphur-containing polyester of the invention has an acid value of less than 20 mg KOH/g, preferably less than 16 mg KOH/g.

The invention also concerns a process for preparing a sulphur-containing polyester comprising an esterification reaction between a partially esterified polyol and a thiolactic acid.

The partially esterified polyol is as described above, including preferential and advantageous features.

The different ratios and esterification conditions are as described above, including preferential and advantageous features.

Example 1 point 1.1 describes such a process.

Advantageously, the partially esterified polyol is obtained by an esterification reaction between a polyol and a carboxylic acid.

The polyol and the carboxylic acid are as described above, including preferential and advantageous features.

The different ratios and esterification conditions are as described above, including preferential and advantageous features.

The invention also relates to a process for preparing a sulphur-containing polyester comprising esterification reactions between a polyol and a carboxylic acid and a thiolactic acid.

More particularly, esterification reactions occur between a polyol and both carboxylic acid and thiolactic acid.

The polyol and the carboxylic acid are as described above, including preferential and advantageous features.

According to a first embodiment, the process is carried out in two steps. Thus, the process for preparing a sulphur-containing polyester comprises or consists of the following steps:
i) an esterification reaction between a polyol and a carboxylic acid to form a partially esterified polyol;
ii) an esterification reaction between the partially esterified polyol of step i) and thiolactic acid;
iii) optionally, purification of the sulphur-containing polyester formed in step ii).

Preferably, the molar equivalent ratio (hydroxyl functions of the polyol) / (carboxyl function(s) of the carboxylic acid), is of at least 1.2, more preferably of at least 1.3, even more preferably of at least 1.4.

Preferably, the molar equivalent ratio (hydroxyl functions of the polyol) / (carboxyl function(s) of the carboxylic acid), is of at most 5, more preferably of at most 4, even more preferably of at most 3.

The esterification reaction between the polyol and the carboxylic acid, is preferably conducted under stirring and heating at a temperature of at least 150°C, more preferably at least 180°C. In particular, the temperature is comprised between 180 and 250°C, more particularly between 200 and 240°C.

Preferably, the esterification reaction between the polyol and the carboxylic acid is carried out until the acid value is less than 10, preferably less than 8, more preferably less than 5 mg KOH/g.

The reaction mixture resulting from step i) is then allowed to cool down. Thiolactic acid is preferably mixed to the partially esterified polyol obtained in step i) at a temperature below 120°C, more preferably below 100°C.

Then, the preferred reaction conditions of the esterification reaction between the partially esterified polyol and the thiolactic acid are as described above according to the first embodiment.

Preferably, the molar equivalent ratio (carboxylic function(s) of the carboxylic acid) / (carboxylic function of the thiolactic acid) is comprised between 0.8 and 4, more preferably between 0.9 and 3, even more preferably between 1 and 2.5.

Preferably, the molar equivalent ratio (hydroxyl functions of the polyol) / (carboxylic functions of the carboxylic acid and the thiolactic acid) is of 1 +/- 0.1, more preferably of 1 +/- 0.05.

Advantageously, no catalyst is used during esterification reactions.

In a preferred embodiment of the first embodiment, the process for preparing a sulphur-containing polyester comprises or consists of the following steps:
i) an esterification reaction between a polyol and a fatty acid, wherein the molar equivalent ratio (hydroxyl functions of the polyol) / (carboxyl function(s) of the fatty acid), is of at least 1.2, to form a partially esterified polyol;
ii) an esterification reaction between the partially esterified polyol of step i) and thiolactic acid;
iii) optionally, purification of the sulphur-containing polyester formed in step ii).

Preferably, the molar ratio fatty acid/ thiolactic acid is comprised between 0.8 and 4, more preferably between 0.9 and 3, even more preferably between 1 and 2.5.

Example 1 point 1.2.1 describes such a process.

According to a second embodiment, the process is carried out in one step. Thus, the process for preparing a sulphur-containing polyester comprises or consists of esterification reactions between a polyol and both carboxylic acid and thiolactic acid, at a temperature of at least 150°C, optionally followed by purification of the sulphur-containing polyester.

Preferably, the temperature is of at least 160°C.

Preferably, the temperature is comprised between 150 and 200°C, more particularly between 160 and 180°C.

An esterification catalyst may be used, such as methanesulfonic acid.

Example 1 point 1.2.2 describes such a process.

As shown in Examples 2 and 3, the sulphur-containing polyester of the invention exhibits many properties.

The invention further relates to the use of the sulphur-containing polyester of the invention, as an extreme pressure additive.

As illustrated in Example 3 point 3.4, weld points of compositions comprising a sulphur-containing polyester according to the invention, are of at least 200 kg.

The invention also relates to the use of the sulphur-containing polyester of the invention, as a friction modifier additive.

In the present invention, friction modifier means friction reducer.

As illustrated in Example 3 point 3.2, the sulphur-containing polyester according to the invention lowers coefficients of friction of mineral oils, especially of naphthenic oil and paraffinic oil.

The invention also relates to the use of the sulphur-containing polyester polyester of the invention, as an anti-wear additive.

In Example 3 point 3.3, it is shown that the sulphur-containing polyester according to the invention increases anti-wear property of mineral oils, especially of naphthenic oils and paraffinic oils.

The sulphur-containing polyester according to the invention has the advantage of being particularly slightly corrosive, in particular towards copper. Indeed, usual sulphur-containing compounds may have very good properties, such as extreme pressure property, but due to the presence of sulphur atoms, are particularly corrosive.

By forming a film on the metal surface, the sulphur-containing polyester of the invention may also inhibit corrosion due to corrosive compounds that might be contained in the composition.

As demonstrated in Example 3 point 3.5, any sulphur-containing polyester according to the invention is slightly corrosive, which means is classified 1 or 2, in particular between 1b and 2e, more particularly between 1b and 2b, according to ASTM D130.

Another advantage of the sulphur-containing polyester of the invention is that it is efficient and can be used over a wide range of temperatures, in particular between 25 and 900°C, more particularly between 25 and 600°C.

The invention also relates to an use of the sulphur-containing polyester of the invention, as a multiproperty additive.

Indeed, the sulphur-containing polyester of the invention may provide a combination of properties, such as extreme pressure, anti-wear, friction modifier and/or corrosion inhibitor.

The invention also concerns a composition comprising the sulphur-containing polyester of the invention, and an oil.

An oil is a hydrophobic substance which is in liquid at 25°C and atmospheric pressure.

The oil may be selected among mineral oils, natural oils and synthetic oils.

Mineral oils are oils obtained from petroleum refining. They consist essentially of carbon and hydrogen atoms, such as paraffinic oils, hydrorefined oils, hydrocracked oils and hydro-isomerized oils.

By natural oils, it is intended oils obtained from renewable materials, such as vegetable oils, animal oils or algae oils.

Synthetic oils are obtained by chemical reaction between molecules of petrochemical origin and/or of renewable origin, with the exception of the usual chemical reactions allowing obtaining mineral oils (such as hydrorefining, hydrocracking hydroisomerization, etc.). Among the various chemical families of synthetic oils, may be mentioned in particular esters, polyalkylene glycols (PAG) and polyalphaolefins (PAO).

Advantageously, the composition according to the invention is a lubricant composition, in particular an engine oil, a hydraulic oil, a gear oil and/or a metalworking oil.

In a lubricant composition, the oil content is of at least 50% by weight, based on the weight of the lubricant composition.

Advantageously, in the composition according to the invention, the oil is a mineral oil and/or a synthetic oil.

Mineral oils can be classified into three types of oils:
- Paraffinic oils, which are linear or branched hydrocarbon molecules;
- Naphtenic oils, which are cyclic hydrocarbon molecules; and
- Aromatic oils.

Preferably, the oil is a mineral oil, in particular, a paraffinic oil and/or a naphthenic oil.

Preferably, the composition of the invention comprises a quantity of sulphur-containing polyester of at least 2% by weight, more preferably at least 3 % by weight, based on the weight of the composition.

Preferably, the composition of the invention comprises a quantity of sulphur-containing polyester of at most 10% by weight, more preferably at most 6% by weight, based on the weight of the composition.

The quantity may vary according to the envisaged application and the person skilled in the art knows how to adapt the oil and the quantity of sulphur-containing polyester of the invention.

Advantageously, the composition of the invention further comprises an additive other than the sulphur-containing polyester of the invention.

Preferably, the additive, other than the sulphur-containing polyester according to the invention, is an additive used in the field of lubricants. A person skilled in the art knows how to select the most suitable additive(s) depending on the lubricating application. By way of example, reference may be made to the following manuals: "Fuels and Lubricants Handbook: technology, properties performance and testing", by George E. Totten, 2003 and "Handbook of lubrification and tribology, vol II : Theory and Design", by Robert W. Bruce, 2012.

The other additive(s) is/are preferably chosen from the group constituted by:
- antioxydants;
- viscosity index improvers;
- pour point depressants;
- anti-foaming agents;
- de-emulsifiers;
- anti-corrosion (or anti-rust) agents;
- thickening agents;
- detergents;
- metal deactivators;
- dispersants.

The antioxidant is preferably selected from the group constituted by saturated organic monosulphides; organic polysulphides, such as dialkyl disulphides, dialkyl trisulphides; sulphurized olefins (SO); dithiocarbamic acid derivatives, such as dithiocarbamates; sulphurized phenols, such as sulphurized alkylphenols (SAP); (alkyl or aryl-) phosphites, such as tributyl phosphite and triaryl-phosphites ; dithiophosphoric acid derivatives, such as dithiophosphates and dialkyldithiophophates, for example zinc dialkyldithiophosphates (ZDTP) ; hindered substituted phenols, such as 2,6-di-t-butyl-4-methylphenol (BHT), 4,4'-methylenebis(2,6-di-tert-butylphenol) (MBDTBP) or dibutylparacresol (DBPC), le 3,5-di-tert-butyl-4-hydroxyhydrocinnamate (ABHHC) optionally alkylated, 4,4'-thiobis(2-methyl-6-tert-butylphenol) and 2,6-di-tert-butylphenol (DTBP) ; sulphurized hindered phenols (SHP); arylamines or aromatic amines, such as mono and dialkyl diphenylamines (DPA) like dioctyldiphenylamine, optionally alkylated N-phenyl-1-naphthylamines (PANA), phenothiazines and alkylated derivatives thereof, tetramethyldiaminophenylmethane and N,N'-disecbutyl-p-phenylenediamine.

The viscosity index improver is preferably selected from the group constituted by polymers of the olefin copolymer type (OCP), polyisobutenes, polymethacrylates, diene polymers, polyalkylstyrenes and/or molybdenum derivatives.

The pour point depressant is preferably selected from the group constituted by metallic soaps, carboxylic acids, polymethacrylates, alkylphenols, dialkyl aryl phtalic acid esters, maleate-styrene copolymers, naphthalene paraffins and/or polyesters of the fumarate-vinyl acetate type.

The anti-foaming agent is preferably selected from the group constituted by silicone oils, silicone polymers, and alkyl acrylates.

The de-emulsifier is preferably a propylene oxide copolymer.

The anti-corrosion (or anti-rust) agent is preferably selected from the group constituted by alkali and/or alkaline-earth metal sulphonates (Na, Mg, Ca salts), fatty acids, fatty amines, alkenylsuccinic acids and/or derivatives thereof, and benzotriazole.

The thickening agent is preferably a fatty ester.

The detergent is preferably chosen from the group constituted by calcium and/or magnesium salts of alkylaryl sulphonates, alkylphenates, alkylsalicylates and/or derivatives thereof.

The metal deactivator is preferably chosen from the group constituted by heterocyclic compounds containing nitrogen and/or sulphur, for example triazole, tolutriazole and benzotriazole.

The dispersant is preferably chosen from the group constituted by alkenylsuccinimides, succinic esters and/or derivatives thereof, and Mannich bases.

The invention relates the use of the composition of the invention as a lubricant composition.

The compositions of the present invention are suitable for use in a broad range of applications, especially in the fields of metalworking and automotive. In particular, the composition of the invention may be a metalworking oil or a gear oil.

The invention also relates a process for preparing the composition of the invention by mixing the sulphur-containing polyester of the invention, an oil and optionally an additive other than the sulphur-containing polyester of the invention.

The invention is further described in the following examples. It will be appreciated that the invention as claimed is not intended to be limited in any way by these examples.
Figure 1 represents Stribeck curves obtained from a mineral oil, from the composition 7 and from comparative composition 1;
Figure 2 represents Stribeck curves obtained from a mineral oil, from the composition 8 and from comparative composition 2.

### Materials used in Examples:

- Thiolactic acid from Bruno Bock Chemische Fabrik GmbH & Co KG;
- Partially esterified polyol:
   - propyleneglycol monooleate (PGMO) (CAS :1330-80-9);
- Polyols:
   - glycerol (G) from KLK Oleo;
   - trimethylolpropane (TMP) from Perstorp;
   - polyglycerol-3 (PG-3) from Spiga Nord S.p.A.;
   - polyglycerol-4 (PG-4) from Spiga Nord S.p.A.;
   - polyglycerol-10 (PG-10) from Spiga Nord S.p.A.;
   - pentaerythritol from Perstorp;
- Fatty acids:
   - oleic acid (C18:1) from KLK Oleo;
   - isostearic acid (isoC18), Radiacid 0907 from Oleon;
- Comparative additive:
   - medium chain chlorinated paraffin (MCCP), Haihang Industry Co., Ltd;
- Oils:
   - Mineral oils:
      ▪ naphthenic oil: Tudalen 3248 from H&R Group;
      ▪ paraffinic oil: Tudalen 10F from H&R Group;
   - Synthetic oil: trimethylolpropane trioleate (TMPTO), Radialube 7364 from Oleon;
   - Vegetable oil: rapeseed oil (CAS :8002-13-9);
- Catalyst: methanesulfonic acid (CAS: 75-75-2).

### Example 1: Preparation of sulphur-containing polyesters according to the invention

### 1.1. From a partially esterified polyol and thiolactic acid

Sulphur-containing polyester P1 is prepared in a four-necked round bottom flask equipped with a temperature probe, a stirrer shaft, a condenser, and a gas sparger, where is charged of 1 mol PGMO and 1 mol of thiolactic acid. The temperature of the mixture is set at 170°C until the acid value is less than 15 mg KOH/g.

Then, the reaction mixture is allowed to cool down to room temperature.

The molar equivalent ratio (hydroxyl function of the partially esterified polyol) / (carboxyl function of the thiolactic acid) is of 1.

Acid value (AV) is defined as the number of milligrams of potassium hydroxide required to neutralize acid functions present in one gram of a chemical substance. This value and in all examples unless otherwise indicated, was measured according to standard AOCS Cd 3d-63.

### 1.2. From a polyol, a fatty acid and thiolactic acid

### 1.2.1. In two steps

A four-necked round bottom flask equipped with a temperature probe, a stirrer shaft, a condenser, and a gas sparger, is charged of a polyol and a fatty acid. The mixture is heated up to 230°C under stirring, until the acid value is less than 5 mg KOH/g.

The temperature of the mixture is then cooled down to 80°C.

Thiolactic acid is then added to the mixture. The temperature of the mixture is set at 170°C until the acid value is less than 15 mg KOH/g.

Then, the reaction mixture is allowed to cool down to room temperature.

Quantities of components used to prepare sulphur-containing polyesters (P2 to P9) are described in Table 1 below:

**Table 1: Contents of sulphur-containing polyesters according to the invention**

| | G (mol) | TMP (mol) | PG-3 (mol) | PG-4 (mol) | PG-10 (mol) | Pentaerythritol (mol) | C18:1 (mol) | IsoC18 (mol) | Thiolactic acid (mol) |
|---|---|---|---|---|---|---|---|---|---|
| P2 | 1 | | | | | | 2 | | 0.86 |
| P3 | | 1 | | | | | 2 | | 0.86 |
| P4 | | | 1 | | | | 3.32 | | 1.42 |
| P5 | | | | 1 | | | 2.85 | | 2.85 |
| P6 | | | | 1 | | | 3.99 | | 1.71 |
| P7 | | | | 1 | | | | 3.99 | 1.71 |
| P8 | | | | | 1 | | 7.98 | | 3.42 |
| P9 | | | | | | 1 | 2.66 | | 1.14 |

For P2-P4 and P6-P9, the molar equivalent ratio (hydroxyl functions of the polyol) / (carboxyl function of the carboxylic acid) is of 1.5 and the molar equivalent ratio (carboxyl function of the carboxylic acid) / (carboxyl function of the thiolactic acid) is of 2.3.

For P5, the molar equivalent ratio (hydroxyl functions of the polyol) / (carboxyl function of the carboxylic acid) is of 2.1 and the molar equivalent ratio (carboxyl function of the carboxylic acid) / (carboxyl function of the thiolactic acid) is of 1.

For P2-P9, the molar equivalent ratio (hydroxyl functions of the polyol) / (carboxyl functions of the carboxylic acid and the thiolactic acid) is of 1.05.

### 1.2.2. In one step

Sulphur-containing polyester P10 is prepared in a four-necked round bottom flask equipped with a temperature probe, a stirrer shaft, a condenser, and a gas sparger, is charged of 1 mol of PG-4, 3.99 mol of oleic acid, 1.71 mol of thiolactic acid and 0.2 wt% of methanesulfonic acid based on the weight of the composition. The mixture is heated up to 170°C under stirring, until the acid value is less than 15 mg KOH/g.

Then, the reaction mixture is allowed to cool down to room temperature.

The molar equivalent ratio (hydroxyl functions of the polyol) / (carboxyl function of the carboxylic acid) is of 1.5 and the molar equivalent ratio (carboxyl function of the carboxylic acid) / (carboxyl function of the thiolactic acid) is of 2.3.

The molar equivalent ratio (hydroxyl functions of the polyol) / (carboxyl functions of the carboxylic acid and the thiolactic acid) is of 1.05.

### Example 2: Characteristics of sulphur-containing polyesters according to the

### invention

### 2.1 Hydroxyl value and acid value

Hydroxyl value (HV) is defined as the number of milligrams of potassium hydroxide required to neutralize the free acids taken up on acetylation of one gram of a chemical substance that contains free hydroxyl groups. This value was measured according to standards AOCS Cd 13-60.

Results are gathered in Table 2 below:

**Table 2: Acid values and hydroxy values of sulphur-containing polyesters according to the invention**

| | AV (mg KOH /g) | HV (mg KOH/g) |
|---|---|---|
| P1 | 4.71 | 89.95 |
| P2 | 4.25 | 52.99 |
| P3 | 4.66 | 58.04 |
| P4 | 5.47 | 73.70 |
| P5 | 10.40 | 74.80 |
| P6 | 14.70 | 82.70 |
| P7 | 3.01 | 82.16 |
| P8 | 9.96 | 84.16 |
| P9 | 7.34 | 78.47 |
| P10 | 9.06 | 72.22 |

### 2.2 Kinematic viscosities at 40°C

Kinematic viscosities were assessed according to the standard ASTM D 445. Results are gathered in Table 3 below:

**Table 3: Kinematic viscosities of sulphur-containing polyesters according to the invention**

| | Kinematic viscosity at 40°C (mm²/s) |
|---|---|
| P1 | 23.8 |
| P2 | 53.5 |
| P3 | 65.3 |
| P4 | 207.5 |
| P5 | 599.0 |
| P6 | 182.2 |
| P7 | 270.1 |
| P8 | 297.0 |
| P9 | 101.7 |
| P10 | 170.5 |

Kinematic viscosity at 40°C of sulphur-containing polyesters P1-P10 vary from 23.8 to 599 mm²/s. More particularly, P1-P4 and P6-P10 present a kinematic viscosity at 40°C less than 300 mm²/s. Those low viscosities facilitate their implementation.

### Example 3: Evaluation of properties of the sulphur-containing polyesters according to the invention

### 3.1. Preparation of compositions according to the invention and of a comparative composition

All the compositions were prepared at room temperature by mixing an additive and an oil using an overhead stirrer at 200 rpm to attain homogeneity.

Contents of each composition are described in Table 4 below:

**Table 4: Contents of compositions 1-14 according to the invention and comparative compositions 1 and 2**

| | Content |
|---|---|
| Composition 1 | 5 wt%* P1 in naphthenic oil |
| Composition 2 | 5 wt%* P1 in paraffinic oil |
| Composition 3 | 5 wt%* P2 in naphthenic oil |
| Composition 4 | 5 wt%* P2 in paraffinic oil |
| Composition 5 | 5 wt%* P3 in naphthenic oil |
| Composition 6 | 5 wt%* P4 in naphthenic oil |
| Composition 7 | 5 wt%* P5 in naphthenic oil |
| Composition 8 | 5 wt%* P6 in paraffinic oil |
| Composition 9 | 5 wt%* P7 in naphthenic oil |
| Composition 10 | 5 wt%* P8 in naphthenic oil |
| Composition 11 | 5 wt%* P9 in paraffinic oil |
| Composition 12 | 5 wt%* P10 in naphthenic oil |
| Composition 13 | 5 wt%* P6 in TMPTO |
| Composition 14 | 5 wt%* P6 in rapeseed oil |
| Comparative composition 1 | 5 wt%* MCCP in naphthenic oil |
| Comparative composition 2 | 5 wt%* MCCP in paraffinic oil |

| | |
|---|---|
| *based on weight of the composition | |

### 3.2. Friction modifier property of sulphur-containing polyesters according to the invention

For the evaluation of the friction modifier property, an Anton Paar MCR 302 coupled with a TPTD-200 tribometer was used.

A 12.7 mm stainless steel ball, immersed in a composition to test, is loaded against the face of a 10 mm diameter cylindrical steel pin and the ball is turning against the stationary cylindrical steel pin, where the friction resulting from the two metal surface contact is measured.

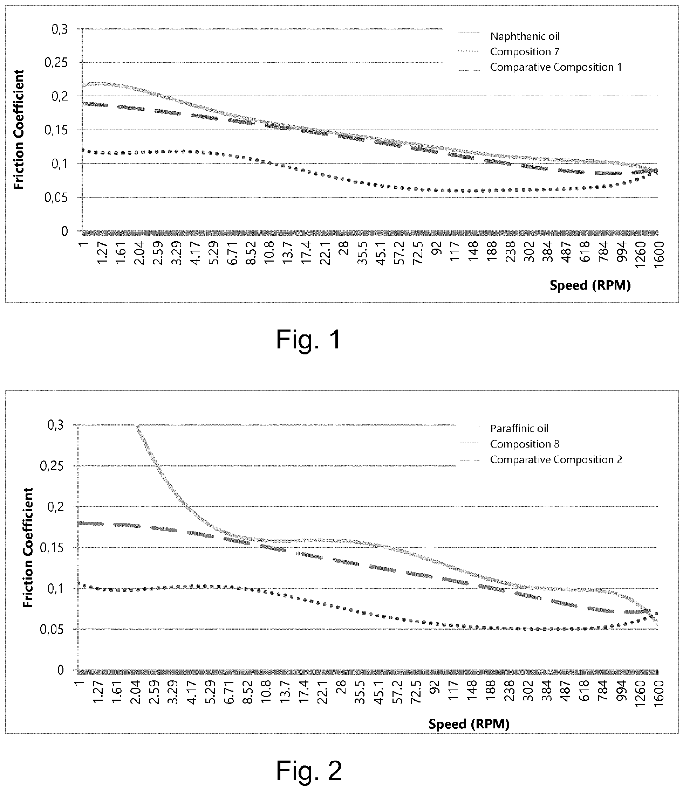

Coefficients of friction were measured as a function of the speed of rotation (1600-1 rpm) at a load of 10N, to establish a Stribeck curve represented in Fig. 1 and 2.

Results show that coefficient of frictions of compositions 7 and 8 are much lower than those of corresponding non additivated oils. Moreover, lower coefficients of friction are obtained with compositions comprising the sulphur-containing polyesters of the invention than those of comparative compositions 1 and 2.

### 3.3. Anti-wear property of sulphur-containing polyesters according to the invention

An Anton Paar Reichert Wear Tester RM2 instrument is used to evaluate the anti-wear property of compositions. During this test, a test roll presses against a revolving friction wheel which is semi immersed in a tested composition. A rotating speed of 960 rpm and the load of 14.71 N (1.5 kgf) are applied during the test. Results are gathered in Table 5 below.

**Table 5: Reichert wear scar areas of mineral oils, composition according to the invention and comparative compositions**

| | Wear scar area (mm²) |
|---|---|
| Naphthenic oil | 37.07 |
| Composition 1 | 7.42 |
| Composition 3 | 10.14 |
| Composition 6 | 11.31 |
| Composition 9 | 12.06 |
| Composition 10 | 11.23 |
| Comparative composition 1 | 9.38 |
| | |
| Paraffinic oil | 35.96 |
| Composition 2 | 6.40 |
| Composition 4 | 9.24 |
| Composition 8 | 8.92 |
| Composition 11 | 10.09 |
| Comparative composition 2 | 4.92 |

Anti-wear properties of compositions according to the invention are comparable to anti-wear properties of comparative compositions comprising a chlorinated compound, especially in naphthenic oil.

### 3.4. Extreme pressure property of sulphur-containing polyesters according to the invention

Four balls method according to standard test ASTM D2783-2014, was used to determined extreme pressure property of sulphur-containing polyesters according to the invention.

The test was run by applying on 3 steel balls placed on a same plane and immersed in a composition or an oil, a load with a rotation at 1770 rpm for 10 s at room temperature, via a 4th steel ball placed at the intersection of the three other balls. The test is repeated at an increased load until welding occurs. Results obtained are gathered in Table 6 below:

**Table 6: Weld points of mineral oils, composition according to the invention and comparative compositions**

| | Weld point (kg) |
|---|---|
| Naphthenic oil | 100 |
| Composition 1 | 200 |
| Composition 3 | 200 |
| Composition 5 | 250 |
| Composition 6 | 250 |
| Composition 7 | 315 |
| Composition 10 | 250 |
| Composition 12 | 250 |
| Comparative composition 1 | 200 |
| | |
| Paraffinic oil | 100 |
| Composition 2 | 250 |
| Composition 4 | 250 |
| Composition 8 | 200 |
| Composition 9 | 200 |
| Comparative composition 2 | 200 |
| | |
| Composition 13 | 200 |
| Composition 14 | 200 |

Compositions according to the invention present good extreme pressure properties, as the weld point increase from 100 to at least 200 kg. Moreover, extreme pressure properties of sulphur-containing polyester according to the invention is at least as good as chlorinated additive.

### 3.5. Corrosion property of sulphur-containing polyesters according to the invention

To evaluate the degree to which the product of the invention will corrode copper-containing materials, copper corrosion test was performed according to ASTM D130.

The corrosiveness of each oil and composition was interpreted in accordance with the classification of the ASTM D130:

| Classification | | Description | Designation |
|---|---|---|---|
| 1 | a | light orange, almost the same as freshly polished strip | Slight tarnish |
| | b | dark orange | |
| 2 | a | claret red | Moderate tarnish |
| | b | lavender | |
| | c | multicolored with lavender blue or silver, or both, overlaid on claret red | |
| | d | silvery | |
| | e | brassy or gold | |
| 3 | a | magenta overcast on brassy strip | Dark tarnish |
| | b | multicolored with red and green showing (peacock), but no grey | |
| 4 | a | transparent black, dark gray or brown with peacock green barely showing | Corrosion |
| | b | graphite or lusterless black | |
| | c | glossy or jet black | |

Results obtained are gathered in Table 7 below.

**Table 7: Copper corrosion test results with naphtenic oil, compositions 1, 5, 9-11, and comparative composition 1**

| | Classification after 3h at 100°C |
|---|---|
| Naphtenic oil | 1a |
| Composition 1 | 2b |
| Composition 5 | 1b |
| Composition 9 | 1b |
| Composition 10 | 2b |
| Composition 11 | 1b |
| Comparative composition 1 | 1b |

Compositions according to the invention present low corrosivity, as only a slight to moderate layer of corrosion was formed over each copper strip. Results are comparable to comparative composition 1 comprising a chlorinated additive.

## Claims

1. Sulphur-containing esterified polyol obtainable by a process comprising esterification reactions between a polyol and a carboxylic acid and a thiolactic acid, or by a process comprising an esterification reaction between a partially esterified polyol and a thiolactic acid.

2. Sulphur-containing esterified polyol according to claim 1, wherein the partially esterified polyol is obtainable by an esterification reaction between a polyol and a carboxylic acid.

3. Sulphur-containing esterified polyol according to claim 1 or 2, wherein the polyol is chosen from the group constituted by glycerol, polyglycerols, ethylene glycol, propylene glycol, neopentyl glycol, 1,3-propanediol, polyethylene glycol, polypropylene glycol, pentaerythritol, trimethylopropane and dimer diols.

4. Sulphur-containing esterified polyol according to any of claim 1 to 3, wherein the molar equivalent ratio (carboxylic function(s) of the carboxylic acid) / (carboxylic function of the thiolactic acid) is comprised between 0.8 and 4.

5. Sulphur-containing esterified polyol according to any of claim 1 to 4, wherein the carboxylic acid is a fatty acid.

6. Process for preparing a sulphur-containing esterified polyol comprising an esterification reaction between a partially esterified polyol and a thiolactic acid.

7. Process for preparing a sulphur-containing esterified polyol according to claim 6, wherein the partially esterified polyol is obtained by an esterification reaction between a polyol and a carboxylic acid.

8. Process for preparing a sulphur-containing esterified polyol comprising esterification reactions between a polyol and a carboxylic acid and a thiolactic acid.

9. Use of the sulphur-containing esterified polyol according to any of claim 1 to 5, as an extreme pressure additive.

10. Use of the sulphur-containing esterified polyol according to any of claim 1 to 5, as a friction modifier additive.

11. Use of the sulphur-containing esterified polyol according to any of claim 1 to 5, as a multiproperty additive, wherein the multiproperty additive is selected from two or more of the group consisting of an extreme pressure additive, an anti-wear additive, a friction modifier and a corrosion inhibitor.

12. Composition comprising the sulphur-containing esterified polyol according to any of claim 1 to 5, and an oil.

13. Composition of claim 12, further comprising an additive other than a sulphur-containing esterified polyol according to any of claim 1 to 5.

14. Use of the composition of claim 12 or 13 as a lubricant composition.

15. Process for preparing the composition according to claim 12 or 13, by mixing the sulphur-containing esterified polyol according to any of claim 1 to 5, an oil, and optionally an additive other than a sulphur-containing esterified polyol according to any of claim 1 to 5.

## Patentansprüche

1. Schwefel enthaltendes verestertes Polyol, erhältlich durch ein Verfahren, das Veresterungsreaktionen zwischen einem Polyol und einer Carbonsäure und einer Thiomilchsäure umfasst, oder durch ein Verfahren, das eine Veresterungsreaktion zwischen einem teilweise veresterten Polyol und einer Thiomilchsäure umfasst.

2. Schwefel enthaltendes verestertes Polyol nach Anspruch 1, wobei das teilweise veresterte Polyol durch eine Veresterungsreaktion zwischen einem Polyol und einer Carbonsäure erhältlich ist.

3. Schwefel enthaltendes verestertes Polyol nach Anspruch 1 oder 2, wobei das Polyol ausgewählt ist aus der Gruppe bestehend aus Glycerin, Polyglycerinen, Ethylenglycol, Propylenglycol, Neopentylglycol, 1,3-Propandiol, Polyethylenglycol, Polypropylenglycol, Pentaerythrit, Trimethylopropan und Dimerdiolen.

4. Schwefel enthaltendes verestertes Polyol nach irgendeinem der Ansprüche 1 bis 3, wobei das Moläquivalentverhältnis (Carboxylfunktion(en) der Carbonsäure) / (Carboxylfunktion der Thiomilchsäure) zwischen 0,8 und 4 liegt.

5. Schwefel enthaltendes verestertes Polyol nach irgendeinem der Ansprüche 1 bis 4, wobei die Carbonsäure eine Fettsäure ist.

6. Verfahren zur Herstellung eines Schwefel enthaltenden veresterten Polyols, umfassend eine Veresterungsreaktion zwischen einem teilweise veresterten Polyol und einer Thiomilchsäure.

7. Verfahren zur Herstellung eines Schwefel enthaltenden veresterten Polyols nach Anspruch 6, wobei das teilweise veresterte Polyol durch eine Veresterungsreaktion zwischen einem Polyol und einer Carbonsäure erhalten wird.

8. Verfahren zur Herstellung eines Schwefel enthaltenden veresterten Polyols, umfassend Veresterungsreaktionen zwischen einem Polyol und einer Carbonsäure und einer Thiomilchsäure.

9. Verwendung des Schwefel enthaltenden veresterten Polyols nach irgendeinem der Ansprüche 1 bis 5 als Hochdruckadditiv.

10. Verwendung des Schwefel enthaltenden veresterten Polyols nach irgendeinem der Ansprüche 1 bis 5 als Reibungsmodifizierungsadditiv.

11. Verwendung des Schwefel enthaltenden veresterten Polyols nach irgendeinem der Ansprüche 1 bis 5 als Multifunktionsadditiv, wobei das Multifunktionsadditiv ausgewählt ist aus zwei oder mehr der Gruppe bestehend aus einem Hochdruckadditiv, einem Anti-Wear-Additiv, einem Reibungsmodifizierungsmittel und einem Korrosionsschutzmittel.

12. Zusammensetzung, umfassend das Schwefel enthaltende veresterte Polyol nach irgendeinem der Ansprüche 1 bis 5 und ein Öl.

13. Zusammensetzung nach Anspruch 12, ferner umfassend ein Additiv, das von einem Schwefel enthaltenden veresterten Polyol nach irgendeinem der Ansprüche 1 bis 5 verschieden ist.

14. Verwendung der Zusammensetzung nach Anspruch 12 oder 13 als Schmiermittelzusammensetzung.

15. Verfahren zur Herstellung der Zusammensetzung nach Anspruch 12 oder 13 durch Mischen des Schwefel enthaltenden veresterten Polyols nach irgendeinem der Ansprüche 1 bis 5, eines Öls und gegebenenfalls eines Additivs, das von einem Schwefel enthaltenden veresterten Polyol nach irgendeinem der Ansprüche 1 bis 5 verschieden ist.

## Revendications

1. Polyol estérifié contenant du soufre pouvant être obtenu par un procédé comprenant des réactions d'estérification entre un polyol et un acide carboxylique et un acide thiolactique, ou par un procédé comprenant une réaction d'estérification entre un polyol partiellement estérifié et un acide thiolactique.

2. Polyol estérifié contenant du soufre selon la revendication 1, dans lequel le polyol partiellement estérifié peut être obtenu par une réaction d'estérification entre un polyol et un acide carboxylique.

3. Polyol estérifié contenant du soufre selon la revendication 1 ou 2, dans lequel le polyol est choisi dans le groupe constitué par le glycérol, les polyglycérols, l'éthylèneglycol, le propylèneglycol, le néopentylglycol, le 1,3-propanediol, le polyéthylèneglycol, le polypropylèneglycol, le pentaérythritol, le triméthylolpropane et les diols dimères.

4. Polyol estérifié contenant du soufre selon l'une quelconque des revendications 1 à 3, dans lequel le rapport en équivalents molaires (fonction(s) carboxylique(s) de l'acide carboxylique) / (fonction carboxylique de l'acide thiolactique) est compris entre 0,8 et 4.

5. Polyol estérifié contenant du soufre selon l'une quelconque des revendications 1 à 4, dans lequel l'acide carboxylique est un acide gras.

6. Procédé pour préparer un polyol estérifié contenant du soufre, comprenant une réaction d'estérification entre un polyol partiellement estérifié et un acide thiolactique.

7. Procédé pour préparer un polyol estérifié contenant du soufre selon la revendication 6, dans lequel le polyol partiellement estérifié est obtenu par une réaction d'estérification entre un polyol et un acide carboxylique.

8. Procédé pour préparer un polyol estérifié contenant du soufre, comprenant des réactions d'estérification entre un polyol et un acide carboxylique et un acide thiolactique.

9. Utilisation du polyol estérifié contenant du soufre selon l'une quelconque des revendications 1 à 5 en tant qu'additif extrême pression.

10. Utilisation du polyol estérifié contenant du soufre selon l'une quelconque des revendications 1 à 5 en tant qu'additif modificateur de friction.

11. Utilisation du polyol estérifié contenant du soufre selon l'une quelconque des revendications 1 à 5 en tant qu'additif multipropriétés, dans laquelle l'additif multipropriétés est choisi parmi deux ou plus du groupe constitué par un additif extrême pression, un additif anti-usure, un modificateur de friction et un inhibiteur de corrosion.

12. Composition comprenant le polyol estérifié contenant du soufre selon l'une quelconque des revendications 1 à 5, et une huile.

13. Composition selon la revendication 12, comprenant en outre un additif autre qu'un polyol estérifié contenant du soufre selon l'une quelconque des revendications 1 à 5.

14. Utilisation de la composition selon la revendication 12 ou 13 en tant que composition lubrifiante.

15. Procédé pour préparer la composition selon la revendication 12 ou 13, par mélange du polyol estérifié contenant du soufre selon l'une quelconque des revendications 1 à 5, d'une huile, et éventuellement d'un additif autre qu'un polyol estérifié contenant du soufre selon l'une quelconque des revendications 1 à 5.
